# NEW EUROPEAN PATENT SPECIFICATION

(11) **EP 1 285 576 B2**
(45) Date of publication and mention of the opposition decision: **26.06.2013**
(45) Mention of the grant of the patent: 29.03.2006
(21) Application number: 02077629.0
(22) Date of filing: 02.07.2002
(51) Int. Cl.: A01J 7/04

(54) **A method of and a device for cleaning the teats and/or the udder of a dairy animal, a method of and a device for milking an animal**
Verfahren und Vorrichtung zum Reinigen der Zitzen und/oder des Euters eines Milchtieres und Verfahren und Vorrichtung zum Melken eines Tieres
Procédé et dispositif pour nettoyer les trayons et/ou le pis d'un animal laitier et procédé et dispositif de traite d'un animal

(30) Priority: 07.08.2001 NL 1018723
(43) Date of publication of application: 26.02.2003
(73) Proprietor: Lely Enterprises AG, 6300 Zug (CH)
(72) Inventor: Fransen, Renatus Ignatus Josephus, 3135 ZD Vlaardingen (NL)
(74) Representative: Corten, Maurice Jean F.M.

(56) References cited:
- EP-A1- 0 514 764
- EP-A1- 0 683 974
- EP-A1- 0 945 057
- EP-A2- 0 349 019
- WO-A-99/27775
- WO-A1-00/67562
- WO-A1-89/00378
- WO-A1-92/19098
- WO-A1-98/08376
- WO-A1-98/42182
- DE-A1- 3 702 465
- GB-A- 1 405 225
- NL-C- 1 000 969
- US-A- 3 183 890
- US-A- 3 971 512
- US-A- 5 101 770
- US-A- 5 483 921
- US-A- 5 673 650
- US-A- 6 095 430
- LAVA-TEAT AND CLIN-TEAT: Costruzioni Tecnologiche Applicate
- Prepping cows consistently; Midwest Dairy Business

## Description

The invention relates to a method of cleaning the teats and/or the udder of a dairy animal according to the preamble of claim 1.

Such a method and device for cleaning the teats and/or the udder are known e.g from WO 98/42102. However, it has appeared that in particular when the teats and/or the udder are highly contaminated, the performed cleaning does not always result in sufficiently clean teats and/or udder.

It is an object of the invention to provide a method of cleaning the teats and/or the udder of a dairy animal by means of which a sufficient cleaning of the teats and/or the udder can be obtained.

According to the invention, for that purpose a method of the above-described type comprises the measures of the characterizing part of claim 1. Due to the fact that, prior to the cleaning step, a soaking fluid is applied on the teats and/or the udder, this soaking fluid can soften dirt present on the teats and/or the udder, especially caked dirt, so that the cleaning step succeeding the soaking step can remove also this dirt from the teats and/or the udder in a simple manner. For the soaking fluid the usual liquids such as water, with possibly a particular soap, shampoo or the like added thereto, may be used.

Although the soaking fluid may be applied with the aid of brushes, cloths or the like, it is preferred for the sake of simplicity when the step of applying a soaking fluid comprises the spraying of soaking fluid.

The method preferably comprises an identification step of identifying an animal. In this manner it may be determined for example which animal has already been subjected to a soaking step.

The method comprises a designation step of designating an animal whose teats and/or udder have to be soaked, the soaking step can be applied very specifically. For example an animal whose teats and/or udder have to be cleaned within a predetermined time may be designated as an animal which has to be subjected to the soaking step.

In this situation it is advantageous when the designation step comprises a location indicating step of indicating the location of a designated animal, so that the animal whose teats and/or udder have to be treated with soaking fluid can be found quickly and efficiently.

Although the soaking step may be carried out manually or by a machine arranged at a fixed place, according to the invention the soaking step is carried out by a mobile device for applying a soaking fluid, the mobile device being provided with a reservoir for soaking fluid or with a connection device for connection with a reservoir for soaking fluid. Thus the animals need not to be disturbed in their activities, and the soaking step can be carried out at any place in the stable or in the meadow.

For the purpose of obtaining a reliable soaking step, and thus obtaining a sufficiently efficient cleaning, the method comprises a checking step of checking whether soaking fluid has been applied on the teats and/or the udder of an animal.

Although the animals may be taught, by the so-called Pavlov effect as a result of applying the soaking fluid, to go to a predetermined place, according to the invention the method comprises after the soaking step a guiding step of guiding the animal subjected to the soaking step to the predetermined place.

according to the invention as a predetermined place a milking parlour for milking an animal is chosen, and prior to the milking a cleaning step is carried out in the milking parlour.

However, in some cases but not according to the invention, it may be desirable to choose a cleaning parlour for cleaning the teats and/or the udder as a predetermined place. For example when an animal has an udder inflammation, for the sake of preventing infection it is recommended to guide the animal to a cleaning parlour which is located at some distance from a milking parlour.

The guiding step is preferably carried out by a mobile device provided with a seizing device for seizing an animal.

A soaking device preferably comprises a sprayer for spraying a soaking fluid. The device is provided with a reservoir for a soaking fluid or with a connection device for connection with a reservoir for soaking fluid.

The device is provided with an identification system for identifying an animal, the identification system being provided with a computer having a memory. In particular the memory is suitable for storing data in relation to the points of time when the teats and/or the udders of animals have been soaked and in relation to the identity of the relevant animals.

In a further device, the computer is suitable for determining, on the basis of historical data in the memory, the animal whose teats and/or udder have to be soaked first. In particular when the teats and/or the udder have to be soaked a certain number of times per day, said determination is advantageous. The memory may then be used in an advantageous manner for also storing the points of time of cleaning of the teats and/or the udder, and for using these data together with the historical data in relation to the soaking steps for determining the animal whose teats and/or udder have to be subjected to a soaking step first. Thus it is possible for example to designate the animal whose teats and/or udder have to be cleaned over a predetermined period of time, so that the soaking fluid has sufficient time to soak the dirt on the teats and/or the udder.

For the purpose of having performed an automatic milking process efficiently, it is preferred when the computer is also suitable for determining dairy animal data in relation to the sequence of animals to be milked, the dairy animal data being used together with the historical data in the memory for determining the animal whose teats and/or udder have to be soaked first.

The device preferably comprises a location indicating means for indicating the location of the animal whose teats and/or udder have to be soaked first. Such a location indicating means is known per se, e.g. from Dutch patent application NL-A-1000969.

Although the soaking device may be disposed at a fixed place, it is advantageous when the device is provided with a mobile device for applying a soaking fluid on the teats and/or the udder. The device preferably comprises a transmitting means for transmitting location data to the mobile device, the mobile device being provided with a receiver device for receiving the location data. For enabling to determine the position of the mobile device the latter is provided with a position determining means.

For the purpose of checking whether soaking fluid has actually been applied on the teats and/or the udder, an embodiment of a device according to the invention is provided with a checking means for checking whether soaking fluid has been applied on the teats and/or the udder of an animal. The checking means preferably comprises a camera, in particular an infrared camera. It is then advantageous when the checking means is disposed on a telescopic carrier.

For the purpose of guiding the animal to a predetermined place after its teats and/or udder have been soaked, the mobile device comprises a guide means for guiding an animal subjected to the soaking step to a predetermined place. In particular the guide means is provided with a seizing device for seizing an animal, or with a component fastened to the animal, such as a belt, collar or the like.

The invention will now be explained in further detail with reference to the accompanying figures, in which:
Figure 1 is a plan view of a stable with a mobile device disposed therein for applying a soaking fluid on the teats and/or the udder of an animal;
Figure 2 is a side view of a mobile device according to Figure 1.

The invention will be described hereinafter by way of example with reference to a mobile device provided with a soaking device. The invention is further described with reference to a milking robot as a predetermined place to which a dairy animal, in particular a cow, is guided after its teats and/or udder have been provided with a soaking fluid. The invention will also be described with reference to a soaking fluid which is applied on the teats and/or the udder of the animal.

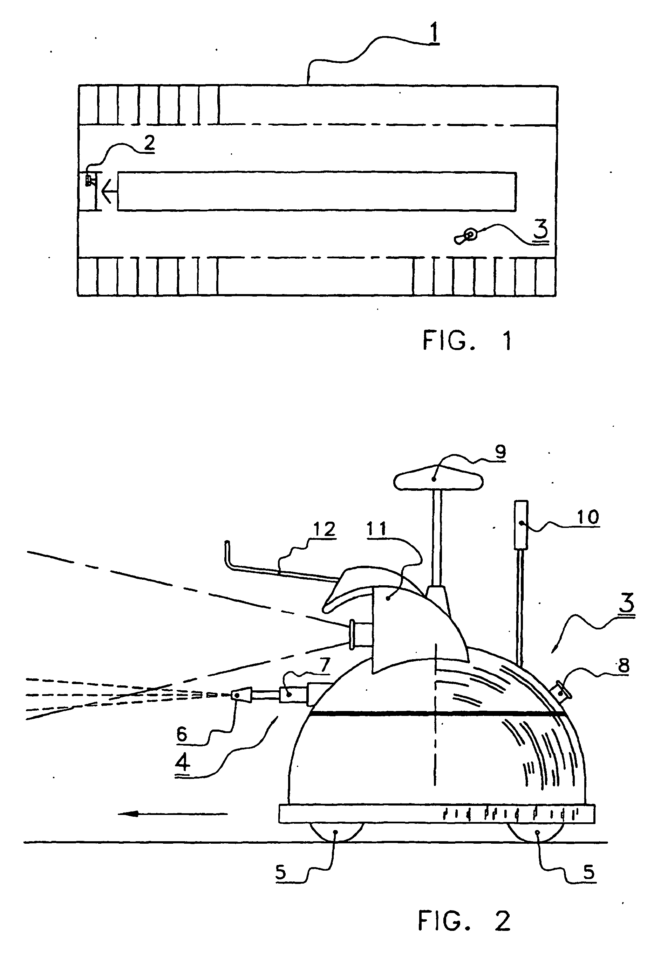

Figure 1 is a plan view of a stable 1 provided with a milking robot 2 for automatically milking animals and a mobile device 3, e.g. an unmanned vehicle, provided with a soaking device 4 (Figure 2) for applying a soaking fluid on the teats and/or the udder of an animal, e.g. a cow.
Figure 2 is a side view of the unmanned vehicle 3 which is provided with wheels 5. The wheels 5 are driven by a (non-shown) driving unit, such as an electric motor.

The soaking device 4 of the unmanned vehicle comprises a sprayer 6 disposed e.g. on a telescopic carrier 7. The sprayer 6 is connected with a container (non-shown in Figure 2) for containing soaking fluid, said container being located in the unmanned vehicle 3. The unmanned vehicle 3 is also provided with a filling connection 8, or another connection device, by means of which the container in the unmanned vehicle 3 may be connected with an external source of soaking fluid. Further means for determining the position of the teats and/or the udder of an animal are not further described since these belong to the state of the art, e.g. the position determining means as used with milking robots for connecting the teat cups to the teats.

The milking robot 2 comprises in a manner known per se an identification system for identifying an animal, the identification system being provided with a computer having a memory. On the basis of the data present in such a memory in relation to the milking of a cow, the computer is able to determine the sequence in which cows have to be milked. Due to this, the computer can indicate a sequence of which cows should be milked consecutively. It being customary to clean, prior to milking, the teats and/or the udder, at least the teats thereof, the milking sequence may also be used to designate those cows whose teats and/or udder have to be treated with soaking fluid.

As disclosed in Dutch patent application NL-A-1000969, the location of these cows may be indicated, so that the device preferably comprises such a known location indicating means for indicating the location of the animal whose teats and/or udder have to be soaked first.

The mobile device 3 is provided with a position determining means 9, which may be constituted by a radar, a GPS-system component or the like. This makes it possible to determine the momentary place of the mobile device 3. For the purpose of moving quickly to the location of a dairy animal, whose teats and/or udder have to be treated with soaking fluid, the computer comprises a (non-shown) transmitter device, or a transmitter device for transmitting location data to the mobile device. The mobile device 3 is provided with a receiver device 10 for receiving the location data, said data being used for (roughly) controlling the mobile device 3 to the location. A further description of the control of the mobile device is omitted here for the sake of simplicity, the more as self-propelled mobile devices are known per se in the state of the art.

When the mobile device 3 has arrived at the location of a cow whose teats and/or udder have to be treated with soaking fluid, the mobile device 3 first has to verify where the teats and/or the udder are located. In the embodiment shown, for that purpose the mobile device 3 is provided with accurate teat determining means 11 in the form of picture recognition equipment. This picture recognition equipment may also be used for verifying whether a cow is standing or lying. If it appears that a cow is lying, it is possible to stimulate the cow e.g. by means of a stimulation device 12 to stand up, so that the teats and/or the udder become accessible to treatment.

When the position of the teats and/or the udder has been determined, the sprayer 6 may be directed to the teats and/or the udder and be put into operation. Directing the sprayer may take place by correct operation of the wheels 5 or by directing the sprayer 6.

The picture recognition equipment 11 may also be used to check whether soaking fluid has been applied on the teats and/or the udder of the cow. If it appears that no or not sufficient soaking fluid has been applied, a signal may be issued so that the sprayer is put into operation again. Besides a camera for picture recognition an infrared camera may be used as well as a checking means. For the purpose of bringing the checking means close to the teats and/or the udder, said means is preferably disposed on a telescopic carrier (non-shown in the figures).

Although not shown in the figures, the mobile device 3 comprises an animal identification system for recognising the animal whose teats and/or udder have to be treated or have been treated with soaking fluid.

When the points of time when the teats and/or the udders of animals have been soaked and the identity of the relevant animals are stored in a memory, these historical data may be used partially for determining the point of time when the next soaking step with a certain animal has to be carried out. These data may also be used for determining of which animal the teats and/or the udder have to be soaked first. The animal identification system may also be used for applying a soaking fluid in dependence of the animal. For that purpose the mobile device 3 is then provided with various soaking fluid containers.

The soaking fluid may be constituted by a fluid known per se, such as water possibly with soap, shampoo or the like as an additive. Further it may be ensured by training or conditioning that a dairy animal, after the soaking fluid has been applied, automatically goes to a certain place, such as the milking robot in the embodiment shown. For the purpose of facilitating that an animal observes that soaking fluid has been applied on its teats and/or udder, additives may be added, such as alcohol (causing cooling of the teats and/or the udder by evaporation), or an additive causing on the contrary heating or tingling of the skin. Such additives appear to be highly suitable for serving as a stimulation fluid, of course in dependence of the concentration and the individual animal.

Additionally or alternatively to an animal automatically going to a predetermined place, the mobile device 3 may comprise a guide means for guiding an animal subjected to the soaking step to a predetermined place. Such a guide means may be constituted by a driving means (see NL-A-1000969) or a seizing device for seizing an animal, or an element disposed on the animal, such as a collar or the like.

Although in the above described embodiment the computer of the identification system belonging to the milking robot is used for controlling the mobile device and controlling the soaking, it will be obvious that a separate computer, adapted to the purpose, may be used as well.

## Claims

1. A method of cleaning the teats and/or the udder of a dairy animal, the method comprising a cleaning step of applying a cleaning fluid on the teats and/or the udder, **characterized in that** the method comprises, prior to the cleaning step, a designation step of designating an animal whose teats and/or udder have to be soaked and a soaking step of applying a soaking fluid on the teats and/or the udder, **in that** the soaking step is carried out by a mobile device for applying a soaking fluid, the mobile device being provided with a reservoir for soaking fluid or with a connection device for connection with a reservoir for soaking fluid and **in that** the method comprises after the soaking step a guiding step of guiding the animal subjected to the soaking step to a predetermined place, and **in that** as a predetermined place a milking parlour for milking an animal is chosen, wherein prior to milking the cleaning step is carried out in the milking parlour.

2. A method as claimed in claim 1, **characterized in that** the step of applying a soaking fluid comprises the spraying of soaking fluid.

3. A method as claimed in claim 1 or 2, **characterized in that** the method comprises an identification step of identifying an animal.

4. A method as claimed in any one of the preceding claims, **characterized in that** the method comprises a checking step of checking whether soaking fluid has been applied on the teats and/or the udder of an animal.

5. A method as claimed in any one of the preceding claims **characterized in that** the guiding step is carried out by said mobile device provided with a seizing device for seizing an animal.

## Patentansprüche

1. Verfahren zum Reinigen der Zitzen und/oder des Euters eines milchgebenden Tieres, wobei das Verfahren einen Verfahrensschritt des Reinigens umfaßt, bei dem eine Reinigungsflüssigkeit auf die Zitzen und/oder das Euter aufgebracht wird, **dadurch gekennzeichnet, daß** das Verfahren vor dem Verfahrensschritt des Reinigens einen Verfahrensschritt des Kennzeichnens, bei dem ein Tier, dessen Zitzen und/oder Euter eingeweicht werden sollen, gekennzeichnet wird und des Einweichens umfaßt, bei dem eine Einweichflüssigkeit auf die Zitzen und/oder das Euter aufgebracht wird, und daß der Verfahrensschritt des Einweichens von einer fahrbaren Vorrichtung zum Aufbringen einer Einweichflüssigkeit durchgeführt wird, wobei die fahrbare Vorrichtung mit einem Behälter für Einweichflüssigkeit oder mit einer Anschlußvorrichtung zum Anschluß an einen Behälter für Einweichflüssigkeit versehen ist, und daß das Verfahren nach dem Verfahrensschritt des Einweichens einen Verfahrensschritt des Leitens vorsieht, bei dem das von dem Verfahrensschritt des Einweichens betroffene Tier zu einem vorgegebenen Ort geleitet wird, und daß als vorgegebener Ort ein Melkstand zum Melken eines Tieres gewählt wird, wobei vor dem Melken der Reinigungsschritt in dem Melkstand durchgeführt wird.

2. Verfahren nach Anspruch 1,
**dadurch gekennzeichnet, daß** der Verfahrensschritt des Aufbringens einer Einweichflüssigkeit das Sprühen von Einweichflüssigkeit umfaßt.

3. Verfahren nach Anspruch 1 oder 2,
**dadurch gekennzeichnet, daß** das Verfahren einen Verfahrensschritt des Identifizierens umfaßt, bei dem ein Tier identifiziert wird.

4. Verfahren nach einem der vorhergehenden Ansprüche,
**dadurch gekennzeichnet, daß** das Verfahren einen Verfahrensschritt des Prüfens umfaßt, bei dem geprüft wird, ob auf die Zitzen und/oder das Euter eines Tieres Einweichflüssigkeit aufgebracht worden ist.

5. Verfahren nach einem der vorhergehenden Ansprüche,
**dadurch gekennzeichnet, daß** der Verfahrensschritt des Leitens von einer fahrbaren Vorrichtung durchgeführt wird, die mit einer Erfassungsvorrichtung zum Erfassen eines Tieres versehen ist.

## Revendications

1. Procédé consistant à nettoyer les trayons et/ou le pis d'un animal laitier, le procédé comprenant une étape de nettoyage consistant à appliquer un fluide de nettoyage sur les trayons et/ou le pis, **caractérisé en ce que** le procédé comprend, avant l'étape de nettoyage, une étape de désignation consistant à désigner un animal dont les trayons et/ou le pis doivent être mouillés et une étape de mouillage consistant à appliquer un fluide mouillant sur les trayons et/ou le pis ; **en ce que** l'étape de mouillage est effectuée au moyen d'un dispositif mobile pour appliquer un fluide mouillant, le dispositif mobile étant doté d'un réservoir de fluide mouillant ou d'un dispositif de raccordement pour raccordement à un réservoir de fluide mouillant ;**en ce que** le procédé comprend, après l'étape de mouillage, une étape de guidage consistant à guider l'animal soumis à l'étape de mouillage vers un endroit prédéterminé ; et **en ce qu'**un box de traite pour la traite d'un animal est choisi en tant qu'endroit prédéterminé, dans lequel avant la traite, l'étape de nettoyage est effectuée dans le box de traite.

2. Procédé selon la revendication 1, **caractérisé en ce que** l'étape d'application d'un fluide mouillant comprend la pulvérisation du fluide mouillant.

3. Procédé selon la revendication 1 ou 2, **caractérisé en ce que** le procédé comprend une étape d'identification consistant à identifier un animal.

4. Procédé selon l'une quelconque des revendications précédentes, **caractérisé en ce que** le procédé comprend une étape de contrôle consistant à contrôler si du fluide mouillant a été appliqué sur les trayons et/ou le pis d'un animal.

5. Procédé selon l'une quelconque des revendications précédentes, **caractérisé en ce que** l'étape de guidage est effectuée par ledit dispositif mobile muni d'un dispositif de saisie pour attraper un animal.
